# EUROPÄISCHE PATENTSCHRIFT

(11) **EP 1 321 692 B1**
(45) Veröffentlichungstag und Bekanntmachung des Hinweises auf die Patenterteilung: **17.05.2006**
(21) Anmeldenummer: 02023940.6
(22) Anmeldetag: 25.10.2002
(51) Int. Cl.: F16F 1/38

(54) **Motorlager**
Engine mount
Support de moteur

(30) Priorität: 21.12.2001 DE 10163555
(43) Veröffentlichungstag der Anmeldung: 25.06.2003
(73) Patentinhaber: ContiTech Vibration Control GmbH, 30165 Hannover (DE)
(72) Erfinder: Holst, Meinert, 30890 Barsinghausen (DE); Berge, Falk, 31867 Lauenau (DE)
(74) Vertreter: Finger, Karsten

(56) Entgegenhaltungen:
- EP-A- 1 098 105
- FR-A- 2 809 996
- US-A- 5 879 026
- US-A- 5 944 298
- US-A- 6 015 141

## Beschreibung

Die Erfindung betrifft ein Motorlager entsprechend dem Oberbegriff des ersten Patentanspruches.

Motorlager zwischen einem Tragarm und einem Lagerkörper sind überall dort anwendbar, wo große Lasten, die Schwingungen erzeugen, so verbunden und gelagert werden müssen, dass das Übertragen von Schwingungen weitestgehend vermieden wird. Das ist insbesondere bei Motoren von Kraftfahrzeugen, die im Rahmen des Fahrzeuges gelagert sind, der Fall. Das Verbinden und Lagern im Rahmen muss so erfolgen, dass möglichst keine Schwingungen auf den Rahmen oder das Fahrgestell des Fahrzeuges übertragen werden, wobei das Befestigen des Motors schnell und sicher erfolgen muss.

Das Aufhängen des Motors kann an einem Tragarm erfolgen, der mit dem Motorlager, der am Rahmen befestigt ist, verbunden wird. Nach dem Stand der Technik sind verschiedene federnde Verbindungen zwischen Motor und dem Rahmen bekannt.

Aus DE 39 05 686 C1 ist eine Hülsengummifeder mit hydraulischer Dämpfung, umfassend zwei einander in achsparalleler Zuordnung umschließende Anschlussteile bekannt. Das Befestigen der Teile an dieser Feder geschieht durch lösbare Verbindungen, die den Nachteil aufweisen, dass es zu mechanischen Belastungen der Verbindungsteile kommt, die durch die Belastung Beschädigungen aufweisen können, was Sicherheitsmängel zur Folge hat. Das Befestigen und Austauschen der Verbindungsteile ist mit Material- und Zeitaufwand verbunden.

In GM-PS 257 009 ist eine Federung für das Befestigen eines Motors beschrieben, bei der ebenfalls der Motor am Rahmen mittels Feder und einer lösbaren Verbindung, einer Schraubenverbindung, befestigt wird. Auch diese Verbindung weist den Nachteil auf, dass eine Vielzahl von Teilen für die Verbindung benötigt wird, durch Verschleiss Schwachstellen auftreten können, wobei ein Brechen des Schraubenbolzens oder ein Ermüden der Gummifeder nach einer Vielzahl von Betriebsstunden nicht ausgeschlossen werden kann. Auch für diese Verbindung ist neben der Vielzahl von Teilen Aufwand zum Verbinden und Lösen der Verbindung erforderlich.

In DE 196 22 248 C2 ist eine hydraulisch dämpfende Hülsengummifeder mit einem inneren Stützkörper, der von einem äußeren Stützkörper mit radialem Abstand umschlossen ist, beschrieben, wobei im Federkörper Ausgleichskammem und Verbindungskanäle angeordnet sind. Die Hülsengummifeder ist zur Lagerung eines Motors eines Kraftfahrzeuges an einer Kraftfahrzeugkarosserie vorgesehen, wobei das Befestigen des Motors als lösbare Bolzen- oder Schraubenverbindung erfolgt. Das hat den Nachteil, dass für die Verbindung zwischen Motorhalter und der Hülsengummifeder Verbindungsteile eingefügt werden müssen, die eine aufwendige De- und Montage erfordert. Es ist daher Aufgabe der Erfindung ein Motorlager zu entwickeln, die mit schwingenden Teilen mit geringem Arbeits- und Materialaufwand schnell und sicher verbunden werden kann.

Diese Aufgabe wird durch eine federnde Verbindung nach den kennzeichnenden Merkmalen des ersten Patentanspruches gelöst. Vorteilhafte Ausgestaltungen der Erfindung sind in Unteransprüchen genannt.

Die erfindungsgemäße Lösung sieht ein Motorlager vor, das ein zylindrisches Innenteil fest umschließt. Der Lagerkörper ist karosserieseitig mittels eines Gehäuses, beispielsweise dem Fahrgestell eines Fahrzeuges, befestigt. Das zylindrische Innenteil kann beispielsweise ein Metallteil darstellen, welches aus Blech geformt oder tiefgezogen ist und vom elastischen Lagerkörper umgeben wird. Das Motorlager besteht vorteilhafter Weise aus Gummi, der um das zylindrische Innenteil aufgebracht wurde. Das umschlossene Innenteil weist mindestens zwei Fenster auf und hat in seiner Querrichtung federnde Eigenschaften, so dass zumindest ein breiterer Körper in die Fenster einsteckbar ist.

Der vom Motorlager zu tragende Körper, beispielsweise ein Motor für Kraftfahrzeuge, wird an einem Tragarm, z. B. durch eine Schraubenverbindung, befestigt. Der Tragarm weist einen Zapfen zum Einschieben im Lagerkörper auf. Die Form des Innenteiles des Motorlagers ist an die Form des Zapfens oder Einsteckzapfens am Tragarm angepasst.

Vorteilhaft ist es, wenn der Zapfen und das Innenteil eine sechseckige Form aufweisen, die eine Verdrehsicherung darstellt. Das kann eine sechseckige Form sein. Am Zapfen des Tragarmes sind mindestens zwei Rastnasen angeordnet, die eine Schräge aufweisen, so dass diese Rastnasen dann als Widerhaken wirken, wenn der Zapfen in das Innenteil eingeführt ist. Deckungsgleich mit den Rastnasen befinden sich im Innenteil Fenster, in denen sich die Rastnasen verhaken.

Zum Herstellen einer unlösbaren Verbindung wird der Zapfen mit den beiden Rastnasen in das Innenteil des Motorlagers eingeschoben, wobei beide Rastnasen, durch ihre Keilform den Durchmesser des zylindrischen Innenteils in federnder Weise erweitert, wonach die Rastnasen in die Fenster einrasten und eine formschlüssige und unlösbare Verbindung zwischen dem Zapfen und dem Innenteil des Motorlager entsteht.

Vorteilhaft ist es, zwei Fenster auszubilden, die eine quadratische oder rechteckige Form aufweisen.

Um eine möglichst feste Verbindung zwischen Innenteil und dem Motorlager zu erreichen, ist es vorteilhaft, wenn das Innenteil in seinem Umfang Durchbrüche aufweist, durch die eine Fixierung mit dem sie umgebenden Material des Lagerkörpers erfolgt. Die Durchbrüche können einfache gebohrte oder gestanzte Löcher darstellen.

Weiterhin ist es vorteilhaft, wenn das Innenteil und der Lagerkörper in ihrer Längsrichtung einen Durchbruch für einen Anschlag des Zapfens aufweisen. Damit ist eine Führung zum geraden Einführen des Einsteckzapfens und eine weitere Verdrehsicherung gegeben und eindeutig erkennbar, dass der Zapfen im Motorlager über eine ganz bestimmte Länge eingerastet ist. Ideal ist es, wenn der Anschlag und das Innenteil eine rechteckige Form aufweisen. Damit ist auf einfache Weise eine weitere Verdrehsicherung geschaffen. Denkbar sind aber auch andere übereinstimmende Formen für die beiden ineinander zu schiebenden Körper.

Weiterhin ist es vorteilhaft das Innenteil von allen Seiten in Gummi einzubetten. Zwischen Innenteil und dem Einsteckzapfen sollte eine Übergangspassung bestehen, so dass der Zapfen straff in das Innenteil hineingleitet.

Weiterhin ist es vorteilhaft die Innenseite des Innenteils mit einer profilierten Oberfläche zu versehen. Nach Einschieben des Zapfens in das Innenteil ist auf diese Weise eine feste, enganliegende Gummischicht vorhanden, die ein Übertragen von Schwingungen und ein Lösen der Verbindung verhindert.

Weiterhin ist es vorteilhaft, wenn der Lagerkörper am Durchbruch für den Anschlag des eine Abstützerhebung aufweist.

Die erfindungsgemäße Lösung hat den Vorteil, dass schwingende Körper, beispielsweise Motoren, über eine Motorlagerung schnell und sicher mit dem Rahmen ohne eine Schraubenverbindung verbindbar sind.

Im Folgenden wird die Verbindung an einem Ausführungsbeispiel und 12 Figuren näher erläutert. Die Figuren zeigen:
- Figur 1:: Anordnung des Tragarmes am Tragkörper
- Figur 2:: Figur 1 in Hauptansicht
- Figur 3:: Schnitt A-A von Figur 2
- Figur 4:: Schnitt B-B von Figur 2
- Figur 5:: Innenmetall in Perspektive
- Figur 6:: Innenmetall in Ansicht von vorn
- Figur 7:: Schnitt D-D des Innenmetalls von Figur 6
- Figur 8:: Einsteckzapfen mit Widerhaken am Tragarm in Seitenansicht
- Figur 9:: Einsteckzapfen am Tragarm in Draufsicht
- Figur 10:: Schnitt durch einen Tragkörper mit Einsteckzapfen und dem Gehäuse des Motorlagers
- Figur 11:: Schnitt C-C von Figur 12
- Figur 12:: Tragkörper mit Profilierung im Schnitt

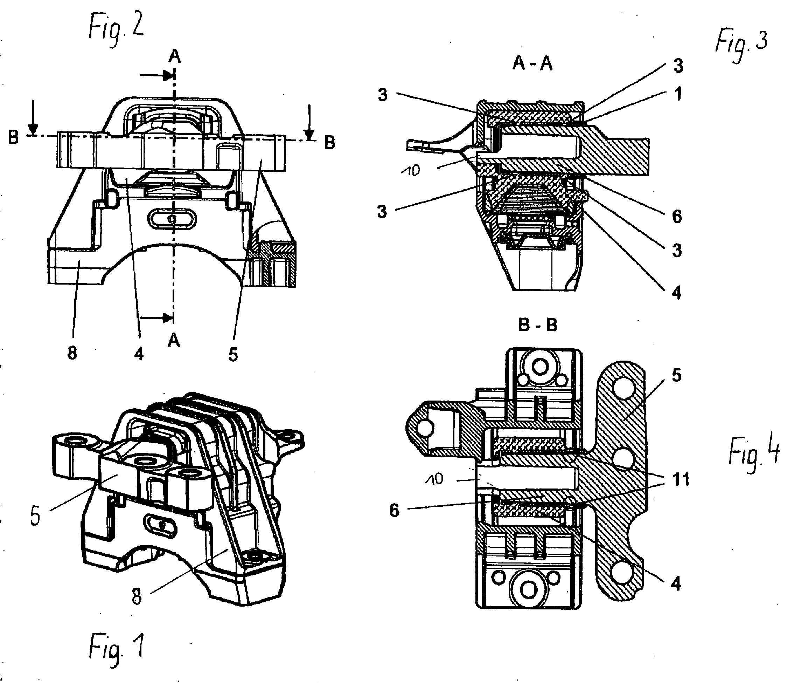

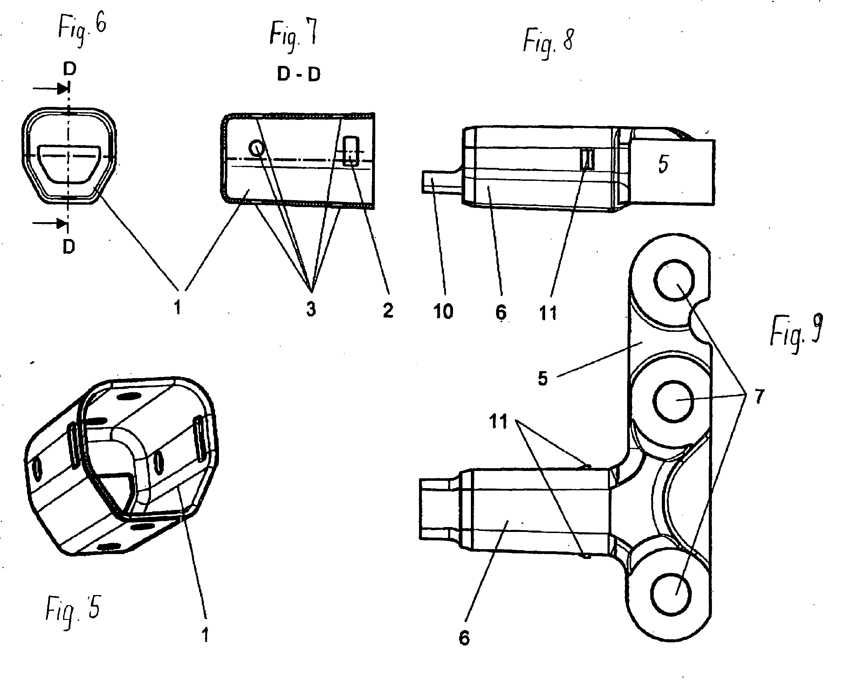

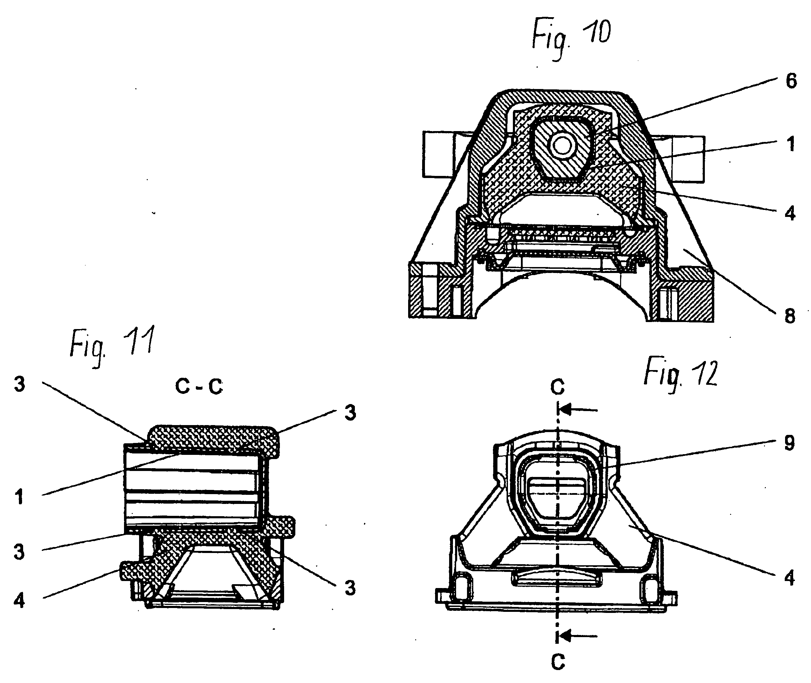

Die Figur 1 zeigt den Tragarm 5, an dem ein Einsteckzapfen 6 angeordnet ist, wobei dieser in den Tragkörper 4 eingesteckt ist, der sich in einem Gehäuse 8 befindet. Im Tragarm 5 sind Befestigungslöcher 7 für den Motor angeordnet, so dass eine feste Verbindung zwischen dem Motor und dem Tragarm 5 vorhanden ist, wobei am Tragarm 5 der Einsteckzapfen 6 angeordnet ist, an dem beidseitig Rastnasen 11 oder Widerhaken vorhanden sind (Figur 9). Der Tragkörper 4 ist am Rahmen des Fahrzeuges festgeschraubt. In Verlängerung des Einsteckzapfens 6 ist ein Anschlag 10 vorhanden, an dem erkennbar ist, wie weit der Zapfen 6 in das Innenmetall 1 eingedrungen ist (Figur 8). Das Innenmetall 1 ist in perspektivischer Darstellung aus Figur 5 ersichtlich. Das Innenmetall 1 wurde im Tiefziehverfahren hergestellt und ist über seinem Querschnitt elastisch. Gegenüberliegend sind zwei rechteckige Fenster 2 angeordnet. In Längsrichtung ist ein Durchbruch 3 für den Anschlag 10 zu sehen. Die Figuren 6 und 7 zeigen das Innenmetall 1 in verschiedenen Ansichten, wobei zwei rechteckige Fenster 2 beidseitig im Innenmetall so angeordnet sind, dass die Widerhaken 11 des Einsteckzapfens 6 sich in ihnen verhaken können. Das Innenmetall 1 wird in den Tragkörper 4 eingegossen, wozu die Löcher 3 wichtig sind, durch die der Gummi auch auf die Innenseiten des Innenmetalls 1 gelangt. Im vorliegenden Fall ist das Innenteil 1 völlig von Gummi umgeben, so dass der Einsteckzapfen 6 als Übergangspassung in ihn hineinpasst, wobei die Widerhaken 11 unter Auffedern der Seitenwände in die Fenster 2 oder Aussparungen unter Kraftaufwand hineingeschoben werden. Damit sind Innenteil 1 und Einsteckzapfen 6 fest und formschlüssig miteinander verbunden. Der Anschlag 10 führt den Einsteckzapfen 6 zusätzlich im Innenteil 1 und zeigt, wie weit der Einsteckzapfen 6 hineingesteckt wurde. Die Figuren 3 und 4 zeigen, wie der Anschlag 10 durch das Innenmetallteil 1 ragt, wobei die Widerhaken 11 den Einsteckzapfen 6 fest mit dem Innenmetallteil 1 verbinden.

Wie aus der Figur 10 zu ersehen ist, ist der Tragkörper 4 mit dem Innenmetall 1 und dem Einsteckzapfen 6 in ein Gehäuse 8 eingeordnet, welches am Rahmen eines Fahrzeuges befestigt ist.

Die Figur 12 zeigt eine profilierte Gummischicht 9 an der Innenseite des Innenmetalls 1. Durch diese wird ein sehr dichtes Anliegen des Einsteckzapfens 6 im Innenteil 1 erreicht.

### Liste der verwendeten Bezugszeichen

- 1.: Innenteil, Innenmetall
- 2.: Fenster, Aussparung
- 3.: Durchbruch, Loch
- 4.: Tragkörper
- 5.: Tragarm
- 6.: Einsteckzapfen
- 7.: Befestigungsloch für Motor
- 8.: Gehäuse des Lagerkörpers (karosserieseitig)
- 9.: Profilierte Gummischicht in 1
- 10.: Anschlag
- 11.: Rastnase, Widerhaken

## Patentansprüche

1. Motorlager zwischen einem Tragarm, vorzugsweise zum Aufhängen eines Motors für Kraftfahrzeuge, und einem Lagerkörper zum Tragen und Federn des am Tragarm angeordneten Gegenstandes **gekennzeichnet durch**
- einen Tragkörper (4) aus Gummi, der in seiner Längsrichtung ein weitestgehend zylindrisches Innenteil (1) fest umschließt,
- wobei das umschlossene Innenteil (1) Fenster (2) und in seiner Querrichtung federnde Eigenschaften aufweist, und
- einen an die Form des Innenteiles (1) angepassten Einsteckzapfen (6) am Tragarm (5)
- wobei der Einsteckzapfen (6) Rastnasen (11) mit einer Schräge aufweist, die beim Einschieben des Einsteckzapfens (6) in das federnde Innenteil (1) in die Fenster (2) des Innenteiles (1) einrasten und mit diesem eine formschlüssige, unlösbare Verbindung bilden.

2. Motorblocklagerung nach Anspruch 1, **dadurch gekennzeichnet, dass** das Innenteil (1) aus Metall besteht.

3. Motorblocklagerung nach den Ansprüchen 1 und 2, **dadurch gekennzeichnet, dass** die Fenster (2) eine quadratische oder rechteckige Form aufweisen.

4. Motorblocklagerung nach den Ansprüchen 1 bis 3, **dadurch gekennzeichnet, dass** das Innenteil (1) in seinem Umfang Durchbrüche (3) aufweist, durch die eine Fixierung mit dem Material des sie umgebenden Tragkörpers (4) erfolgt.

5. Motorblocklagerung nach den Ansprüchen 1 bis 4, **dadurch gekennzeichnet, dass** das Innenteil (1) und der Tragkörper (4) in ihrer Längsrichtung einen Durchbruch (3) für einen Anschlag (10) des Einsteckzapfens (6) aufweisen.

6. Motorblocklagerung nach den Ansprüchen 1 bis 5, **dadurch gekennzeichnet, dass** das Innenteil (1) und der Einsteckzapfen (6) eine sechseckige Form aufweisen.

7. Motorblocklagerung nach den Ansprüchen 1 bis 6, **dadurch gekennzeichnet, dass** das Innenteil (1) und der Einsteckzapfen (6) eine Übergangspassung bilden.

8. Motorblocklagerung nach einem der Ansprüche 1 bis 7, **dadurch gekennzeichnet, dass** das Innenteil (1) von allen Seiten in Gummi eingebettet ist.

9. Motorblocklagerung nach den Ansprüchen 1 bis 8, **dadurch gekennzeichnet, dass** die Innenseite des Innenteils (1) eine profilierte Oberfläche (9) aufweist.

10. Motorblocklagerung nach den Ansprüchen 1 bis 9, **dadurch gekennzeichnet, dass** der Tragkörper (4) nach dem Durchbruch (3) für den Anschlag (10) des Einsteckzapfens (6) eine Abstützerhebung aufweist.

## Claims

1. Engine mount between a bearing arm, preferably for suspending an engine for motor vehicles, and a mounting body for bearing and spring-mounting the object which is arranged on the bearing arm, **characterized by**
- a bearing body (4) made from rubber, which in its longitudinal direction tightly surrounds a largely cylindrical inner part (1),
- the surrounded inner part (1) having windows (2) and having elastic properties in its transverse direction,
- an insertion pin (6), which is adapted to the shape of the inner part (1), on the bearing arm (5),
- the insertion pin (6) having latching studs (11) with a bevel which, when the insertion pin (6) is inserted into the elastic inner part (1), engage in the windows (2) of the inner part (1) and form a positive, non-detachable connection to said inner part (1).

2. Engine block mounting according to Claim 1, **characterized in that** the inner part (1) is composed of metal.

3. Engine block mounting according to Claims 1 and 2, **characterized in that** the windows (2) are quadratic or rectangular in shape.

4. Engine block mounting according to Claims 1 to 3, **characterized in that** the inner part (1) has in its circumference apertures (3), by means of which fixture to the material of the bearing body (4) which surrounds said apertures (3) is carried out.

5. Engine block mounting according to Claims 1 to 4, **characterized in that** the inner part (1) and the bearing body (4) have in their longitudinal direction an aperture (3) for a stop (10) of the insertion pin (6).

6. Engine block mounting according to Claims 1 to 5, **characterized in that** the inner part (1) and the insertion pin (6) are hexagonal in shape.

7. Engine block mounting according to Claims 1 to 6, **characterized in that** the inner part (1) and the insertion pin (6) form a transition fit.

8. Engine block mounting according to Claims 1 to 7, **characterized in that** the inner part (1) is embedded in rubber on all sides.

9. Engine block mounting according to Claims 1 to 8, **characterized in that** the inside of the inner part (1) has a contoured surface (9).

10. Engine block mounting according to Claims 1 to 9, **characterized in that** the bearing body (4) has a support elevation after the aperture (3) for the stop (10) of the insertion pin (6).

## Revendications

1. Support de moteur entre un bras porteur, de préférence pour accrocher un moteur de véhicules automobiles, et un corps de palier pour porter et assurer la suspension de l'objet disposé sur le bras porteur, **caractérisé par**
- un corps porteur (4) en caoutchouc, qui entoure fixement dans sa direction longitudinale une partie intérieure (1) essentiellement cylindrique,
- la partie intérieure entourée (1) présentant des fenêtres (2), et des propriétés de suspension dans sa direction transversale, et
- un tourillon d'enfichage (6) sur le bras porteur (5), adapté à la forme de la partie intérieure (1),
- le tourillon d'enfichage (6) présentant des nez d'encliquetage (11) avec un biseautage, qui, lors de l'insertion du tourillon d'enfichage (6) dans la partie intérieure élastique (1), s'encliquètent dans les fenêtres (2) de la partie intérieure (1) et forment avec celle-ci une connexion par engagement positif indesserrable.

2. Support de bloc moteur selon la revendication 1, **caractérisé en ce que** la partie intérieure (1) se compose de métal.

3. Support de bloc moteur selon les revendications 1 et 2, **caractérisé en ce que** les fenêtres (2) présentent une forme quadratique ou rectangulaire.

4. Support de bloc moteur selon les revendications 1 à 3, **caractérisé en ce que** la partie intérieure (1) présente des interruptions (3) sur sa circonférence, par lesquelles s'effectue une fixation avec le matériau du corps porteur (4) les entourant.

5. Support de bloc moteur selon les revendications 1 à 4, **caractérisé en ce que** la partie intérieure (1) et le corps porteur (4) présentent, dans leur direction longitudinale, une interruption (3) pour une butée (10) du tourillon d'enfichage (6).

6. Support de bloc moteur selon les revendications 1 à 5, **caractérisé en ce que** la partie intérieure (1) et le tourillon d'enfichage (6) présentent une forme hexagonale.

7. Support de bloc moteur selon les revendications 1 à 6, **caractérisé en ce que** la partie intérieure (1) et le tourillon d'enfichage (6) forment un ajustement de transition.

8. Support de bloc moteur selon l'une quelconque des revendications 1 à 7, **caractérisé en ce que** la partie intérieure (1) est noyée dans du caoutchouc de tous les côtés.

9. Support de bloc moteur selon les revendications 1 à 8, **caractérisé en ce que** le côté intérieur de la partie intérieure (1) présente une surface profilée (9).

10. Support de bloc moteur selon les revendications 1 à 9, **caractérisé en ce que** le corps porteur (4) présente un rehaussement de soutien après l'interruption (3) pour la butée (10) du tourillon d'enfichage (6).
